# FASCICULE DE BREVET EUROPEEN

(11) **EP 2 316 701 B1**
(45) Date de publication et mention de la délivrance du brevet: **30.03.2016**
(21) Numéro de dépôt: 10189008.5
(22) Date de dépôt: 27.10.2010
(51) Int. Cl.: B60T 8/17, B64C 25/42

(54) **Architecture de système de freinage électromécanique**
Aufbau eines elektromechanischen Bremssystems
Architecture of an electromechanical braking system

(30) Priorité: 30.10.2009 FR 0905215
(43) Date de publication de la demande: 04.05.2011
(73) Titulaire: Messier-Bugatti-Dowty, 78140 Vélizy-Villacoublay (FR)
(72) Inventeur: Frank, David, 75013, PARIS (FR)
(74) Mandataire: Parzy, Benjamin Alain

(56) Documents cités:
- EP-A1- 1 547 918
- US-A1- 2008 258 547

## Description

L'invention est relative à une architecture de système de freinage électromécanique.

### ARRIERE-PLAN TECHNOLOGIQUE DE L'INVENTION

On connaît, notamment du document US6296325, des architectures de système de freinage comportant une pluralité de contrôleurs de freins (ou EMACs, pour Electro Mechanical Actuator Controller) qui sont agencés deux à deux pour fournir de façon redondante des signaux de puissance calibrée aux actionneurs électromécaniques de freinage de deux roues. L'un des EMACs fournit des signaux de puissance calibrée à un groupe d'actionneurs d'une roue ainsi qu'à un groupe d'actionneurs d'une roue adjacente, l'autre EMAC fournissant des signaux de puissance calibrée aux actionneurs restant de ces deux roues, les deux EMAC étant connectés à des sources de puissance distinctes, de sorte que la perte de l'un des EMAC ou de l'une des sources de puissance ne fait perdre qu'une partie des actionneurs sur chacune des roues, l'autre parties des actionneurs restant contrôlée par l'autre EMAC.

Dans ce document, les EMACs sont qualifiés de redondants bien que les actionneurs sont chacun connectés à un unique EMAC, de sorte que la panne d'un EMAC condamne irrémédiablement les actionneurs reliés à l'EMAC défaillant. Aucun autre EMAC ne vient commander ces mêmes actionneurs en cas de panne de l'EMAC correspondant. A proprement parler, les EMACs ne sont donc pas redondants. Ils sont cependant chacun agencés pour augmenter l'effort exercé par les actionneurs reliés à l'EMAC valide si l'EMAC associé est défaillant, de sorte à compenser au moins partiellement la perte de l'EMAC défaillant et des actionneurs associés.

Cependant, sur une telle architecture, la perte d'un EMAC est critique et empêche le départ de l'aéronef, car la perte de cet EMAC entraîne la perte des actionneurs associés porté par l'un des atterrisseurs, et la survenue subséquente de la panne de l'EMAC appairé alimentant les autres actionneurs portés par ce même atterrisseur provoquerait la perte totale du freinage sur l'ensemble des actionneurs de cet atterrisseur, ce qui est inacceptable.

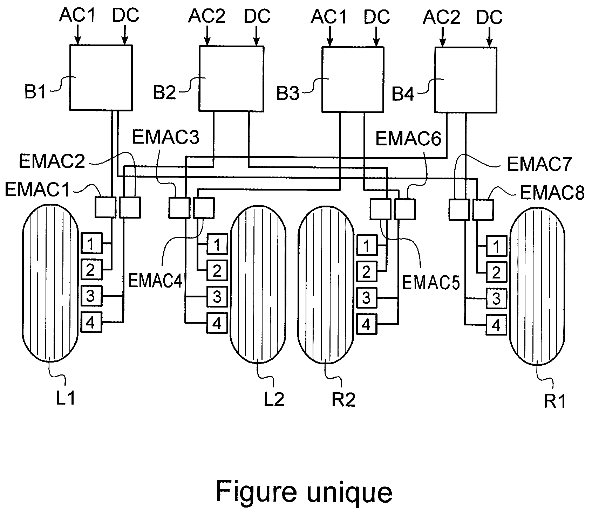

Dans le document US6402259, il est proposé à la figure 10 une architecture avec des EMACs véritablement redondants, qui sont associés par paires pour contrôler tous les deux tous les actionneurs d'un atterrisseur, de sorte que si un EMAC est défaillant, l'EMAC associé peut contrôler la totalité des actionneurs contrôlés par l'EMAC défaillant.

Encore une fois, la perte d'un EMAC est critique et empêche le départ de l'aéronef, car la survenue subséquente de la panne de l'EMAC appairé provoquerait la perte totale du freinage sur l'ensemble des actionneurs portés par l'un des atterrisseurs, ce qui est encore une fois inacceptable.

Des autres architectures d'alimentation de freins d'aéronef selon le préambule de la revendication 1 sont divulguées dans les documents US2008/0258547 A1 et EP 1 547 918 A1.

### OBJET DE L'INVENTION

L'invention vise à améliorer les architectures de freinage existantes, afin de diminuer les conséquences de la perte d'un EMAC.

### BREVE DESCRIPTION DE L'INVENTION

En vue de la réalisation de ce but, on propose une architecture d'alimentation de freins d'aéronef, pour un aéronef comportant au moins deux atterrisseurs comportant chacun un certain nombre de roues, chacune des roues étant équipée de freins comportant chacun un certain nombre d'actionneurs électromécaniques de freinage, l'architecture comportant des contrôleurs (EMACs) pour fournir aux actionneurs des signaux de puissance en réponse à un ordre de freinage, les roues étant sur chacun des atterrisseurs regroupées en un premier groupe et un deuxième groupe complémentaires de sorte que pour chaque groupe de roues, un premier groupement d'actionneurs est contrôlé par un premier contrôleur qui ne contrôle que ces actionneurs, et un deuxième groupement complémentaire d'actionneurs est contrôlé par un deuxième contrôleur qui ne contrôle que ces actionneurs.

Ainsi, la perte d'un EMAC n'affecte au plus que les actionneurs contrôlés par cet EMAC, qui peuvent encore être alimentés par le deuxième EMAC. En cas de panne du deuxième EMAC, les actionneurs correspondants sont définitivement perdus. Au pire donc, une double panne d'EMAC conduit à la perte du freinage sur l'un des groupes de roues, mais pas sur toutes les roues de l'atterrisseur, comme dans les architectures connues. Ici, les EMAC ne sont pas redondants, la perte d'un EMAC étant de préférence compensée par l'EMAC appairé qui est programmé pour augmenter l'effort de freinage du groupement d'actionneurs qu'il commande.

### BREVE DESCRIPTION DES FIGURES

L'invention sera mieux comprise à la lumière de la description qui suit de l'unique figure représentant une architecture de freinage selon un mode particulier de réalisation de l'invention.

### DECRIPTION DETAILLEE DE L'INVENTION

L'invention est ici décrite en relation avec un aéronef du type A320 ou B737 ou tout autre avion à quatre roues freinées, comportant deux atterrisseurs principaux portant chacun deux roues freinées, respectivement désignées L1 et L2 pour les roues portées par l'atterrisseur principal gauche, et R1 et R2 pour les roues portées par l'atterrisseur principal droit. Il est bien évident que l'invention n'est pas limitée à ce type d'aéronef, et la façon dont l'invention peut s'appliquer à d'autres types d'aéronefs est précisée en fin de description.

Chacune des roues est équipée d'un frein électromécanique comportant ici quatre actionneurs par frein (respectivement numérotés 1, 2, 3, 4 sur chacune des roues).

L'architecture comporte ici quatre boîtiers d'alimentation, respectivement B1, B2, B3 et B4, agencés pour recevoir de la puissance électrique de l'un des bus de puissance de l'aéronef. En l'occurrence, les boîtiers d'alimentation B1 et B3 reçoivent la puissance d'un premier bus de puissance AC1 (typiquement une tension alternative de 115 volts), et les boîtiers d'alimentation B2 et B4 reçoivent la puissance d'un deuxième bus de puissance AC2 (mêmes caractéristiques), indépendant du premier bus de puissance.

En outre, les quatre boîtiers d'alimentation sont ici connectés à une source de tension continue DC (les batteries de l'aéronef fournissant typiquement 28 volts continus).

Les boîtiers d'alimentation regroupent essentiellement des convertisseurs AC/DC pour convertir le courant alternatif des sources de puissance en courant continu (typiquement 270 VDC), ainsi qu'un convertisseur DC/DC pour convertir le courant continu de la batterie en courant de puissance continu. Les boîtiers d'alimentation contiennent également des commutateurs commandés pour passer de l'une à l'autre des sources de puissance.

Comme cela sera détaillé plus loin, la provision selon l'invention de plusieurs boîtiers d'alimentation (contrairement à la disposition illustrée à la figure 10 du document US6402259 dans laquelle un seul boîtier d'alimentation ou « power converter » est prévu) permet d'améliorer la disponibilité de l'architecture de l'invention.

Chacun des boîtiers d'alimentation B1...B4 est relié à deux contrôleurs, nommés ci-dessous EMACs, parmi les huit contrôleurs prévus. Les EMACs ont pour fonction de calibrer la puissance fournie par les boîtiers d'alimentation en un signal de puissance triphasé à destination des actionneurs, en réponse à un signal de freinage généré par un calculateur de freinage. Pour ce faire, les EMACs comprennent des moyens de calibration commandés sous la forme d'un onduleur ainsi que l'électronique de contrôle du moteur des actionneurs associés.

La disposition des moyens de conversion dans des boîtiers d'alimentation séparés des EMACs proprement dits recueillant les moyens de calibration commandés présente plusieurs avantages. En effet, il est intéressant de pouvoir disposer les batteries à côté des boîtiers d'alimentation, puisque la conversion de 28 VDC en 270 VDC, sous une puissance de quelques kilowatts, amène à un ampérage important, et donc un câble de section importante entre la batterie et les moyens de conversion, dont il convient de limiter la longueur. On disposera donc de préférence les boitiers d'alimentation au voisinage des batteries qui sont plutôt disposées à l'avant de l'aéronef. En outre, il est intéressant de placer les moyens de calibration au plus près des actionneurs afin de minimiser la longueur des câbles (trois câbles par moteur et au moins quatre câbles pour le capteur de position angulaire associé) amenant la puissance aux actionneurs et courant le long de l'atterrisseur. La disposition de ces deux moyens dans deux boîtiers séparés permet donc de répondre à ces deux objectifs.

Les EMACS sont respectivement numérotés de 1 à 8, et chaque EMAC contrôle uniquement deux actionneurs d'un même frein (ou d'une même roue, ce qui revient au même), selon ici la disposition suivants:
- l'EMAC 1 contrôle les actionneurs 1, 2 de la roue L1 portée par l'atterrisseur principal gauche;
- l'EMAC 2 contrôle les actionneurs 3, 4 de la roue L1 portée par l'atterrisseur principal gauche;
- l'EMAC 3 contrôle les actionneurs 1, 2 de la roue L2 portée par l'atterrisseur principal gauche;
- l'EMAC 4 contrôle les actionneurs 3, 4 de la roue L2 portée par l'atterrisseur principal gauche;
- l'EMAC 5 contrôle les actionneurs 1, 2 de la roue R2 portée par l'atterrisseur principal droit;
- l'EMAC 6 contrôle les actionneurs 3, 4 de la roue R2 portée par l'atterrisseur principal droit;
- l'EMAC 7 contrôle les actionneurs 1, 2 de la roue R1 portée par l'atterrisseur principal droit;
- l'EMAC 8 contrôle les actionneurs 3, 4 de la roue R1 portée par l'atterrisseur principal droit.

Ainsi, et contrairement aux architectures connues, les EMACs ne contrôlent ici qu'une partie des actionneurs d'une unique roue. Les EMACs ne sont donc pas redondants, au sens usuel du terme.

Les boîtiers d'alimentation alimentent les actionneurs de frein selon la disposition suivants:
- le boîtier B1 alimente l'EMAC 1 et l'EMAC 8;
- le boîtier B2 alimente l'EMAC 2 et l'EMAC 5;
- le boîtier B3 alimente l'EMAC 4 et l'EMAC 6;
- le boîtier B4 alimente l'EMAC 3 et l'EMAC 7.

Cette disposition présente les avantages illustrés sur le tableau suivant, qui représente l'incidence de la panne de l'un des boîtiers d'alimentation sur la capacité de freinage de l'aéronef:

| Boîtier en panne | B1 | B2 | B3 | B4 |
|---|---|---|---|---|
| Actionneurs valides sur L1 | 3,4 | 1,2 | 1,2,3,4 | 1,2,3,4 |
| Actionneurs valides sur L2 | 1,2,3,4 | 1,2,3,4 | 3,4 | 1,2 |
| Actionneurs valides sur R2 | 1,2,3,4 | 3,4 | 1,2 | 1,2,3,4 |
| Actionneurs valides sur R1 | 3,4 | 1,2,3,4 | 1,2,3,4 | 1,2 |

Ainsi, on s'aperçoit que la panne de l'un des boîtiers d'alimentation fait perdre deux actionneurs sur l'une des roues de l'un des atterrisseurs, et deux actionneurs sur l'une des roues de l'autre atterrisseur, de sorte que sur chacun des atterrisseurs, six actionneurs de freinage restent alimentés. Il reste donc possible d'effectuer un freinage parfaitement symétrique.

Il est aisé de compenser au moins partiellement cette panne en demandant aux actionneurs qui restent alimentés de fournir un surcroît d'effort de freinage.

On va maintenant examiner la conséquence de la panne supplémentaire de l'un des boîtiers. Sur les tableaux qui suivent, on examine successivement quels sont les actionneurs qui restent alimentés, lorsqu'après une panne de l'un des boîtiers (nommé en en-tête du tableau), l'un des autres boîtiers tombe en panne.

| Boîtier B1 en panne | B2 | B3 | B4 |
|---|---|---|---|
| Actionneurs valides sur L1 | -- | 3,4 | 3,4 |
| Actionneurs valides sur L2 | 1,2,3,4 | 3,4 | 1,2 |
| Actionneurs valides sur R2 | 3,4 | 1,2 | 1,2,3,4 |
| Actionneurs valides sur R1 | 3,4 | 3,4 | -- |

| Boîtier B2 en panne | B1 | B3 | B4 |
|---|---|---|---|
| Actionneurs valides sur L1 | -- | 1,2 | 1,2 |
| Actionneurs valides sur L2 | 1,2,3,4 | 3,4 | 1,2 |
| Actionneurs valides sur R2 | 3,4 | -- | 3,4 |
| Actionneurs valides sur R1 | 1,2,3,4 | 1,2,3,4 | 1,2 |

| Boîtier B3 en panne | B1 | B2 | B4 |
|---|---|---|---|
| Actionneurs valides sur L1 | 3,4 | 1,2 | 1,2,3,4 |
| Actionneurs valides sur L2 | 3,4 | 3,4 | -- |
| Actionneurs valides sur R2 | 1,2 | -- | 1,2 |
| Actionneurs valides sur R1 | 3,4 | 1,2,3,4 | 1,2 |

| Boîtier B4 en panne | B1 | B2 | B3 |
|---|---|---|---|
| Actionneurs valides sur L1 | 3,4 | 1,2 | 1,2,3,4 |
| Actionneurs valides sur L2 | 1,2 | 1,2 | -- |
| Actionneurs valides sur R2 | 1,2,3,4 | 3,4 | 1,2 |
| Actionneurs valides sur R1 | -- | 1,2 | 1,2 |

Ainsi, on s'aperçoit que la perte de deux boîtiers d'alimentation laisse à chaque fois quatre actionneurs alimentés sur chacun des atterrisseurs. Selon le cas, il peut s'agir de deux actionneurs par roue, ou de quatre actionneurs d'une même roue, l'autre roue ne disposant alors plus d'actionneurs alimentés.

Il reste néanmoins possible d'effectuer un freinage symétrique. De même que pour la panne simple, il reste possible de compenser au moins partiellement la perte des actionneurs non alimentés en demandant aux actionneurs restant alimentés de fournir un surcroît d'effort de freinage. Ceci est bien sûr valable si les surcroits d'effort appliqués ne font pas dépasser aux efforts de freinage développé la limite d'adhérence de la piste. Si tel était le cas, le freinage serait faiblement asymétrique, ce qui pourrait nécessiter une légère compensation au moyen de la gouverne de direction ou de la commande d'orientation de l'atterrisseur auxiliaire.

En outre, la perte de l'un des bus de puissance AC1 ou AC2 limite la puissance disponible pour l'alimentation des boîtiers concernés (respectivement B1, B3, ou B2, B4) à la puissance disponible sur la source de puissance continue. Néanmoins, elle ne fait pas perdre entièrement la capacité de freinage des actionneurs reliés aux boîtiers d'alimentation concernés. En particulier, si les batteries de l'aéronef sont dimensionnées pour fournir au moins 50% de l'effort nominal de freinage, la perte de l'un des bus de puissance survenue après un départ de l'aéronef en condition dégradée (par exemple avec l'un des EMAC en panne ou l'un des boîtiers d'alimentation en panne) n'impacte pas la distance critique de freinage puisqu'il est toujours possible de freiner avec 25% de l'effort nominal sur les roues concernées, ce qui représente sensiblement l'effort développable sur piste mouillée qui définit cette distance critique.

On remarquera que chacun des boîtiers d'alimentation comporte deux sorties distinctes, une pour chaque EMAC. Ainsi, la perte d'une liaison électrique entre un boîtier l'EMAC ne conduit à la perte que de deux actionneurs, et non des quatre actionneurs alimentés par le boîtier.

Enfin, la perte de l'un des EMAC ne conduit au plus qu'à la perte que de deux actionneurs, la perte d'un deuxième EMAC conduisant à la perte de quatre actionneurs, ce qui provoque au pire la perte totale de freinage sur une roue.

De préférence, chaque actionneur est dimensionné pour pouvoir développer, au moins de façon occasionnelle, un effort de freinage équivalent à celui développé par deux actionneurs d'un frein dont tous les actionneurs sont alimentés lors d'un freinage qui amènerait la roue correspondante à la limite du blocage au cours d'un atterrissage sur piste sèche.

Pour un tel freinage, l'effort maximal développé par un actionneur d'un frein dont tous les actionneurs sont alimentés est de l'ordre de 66% de l'effort nominal (qui est par définition l'effort de freinage qui doit être généré par un actionneur lors d'un décollage avorté à masse maximale). Il convient donc de dimensionner les actionneurs pour qu'ils puissent fournir occasionnellement un effort égal à 132% de l'effort nominal.

Ainsi, avec uniquement deux actionneurs sur les quatre, il est donc possible de développer sur la roue concernée un effort de freinage égal à 132/2=66% de l'effort de freinage nominal, ce qui correspond à l'effort développé par un frein dont tous les actionneurs sont alimentés avant que la roue ne parte au blocage lors d'un atterrissage sur piste sèche.

L'invention n'est pas limitée à ce qui vient d'être décrit, mais englobe au contraire toute variante entrant dans le cadre défini par les revendications.

En particulier, bien sur l'exemple illustré, les roues sont équipées de freins qui ont un nombre pair d'actionneurs, les actionneurs étant répartis en un premier groupement (actionneurs 1, 2) d'actionneurs alimentés par l'un des boîtiers, et un deuxième groupement complémentaire (actionneurs 3, 4) d'actionneurs alimentés par un autre boîtier, les groupements ayant un nombre égal d'actionneurs, on pourra plus généralement répartir les actionneurs en deux groupements, même si le nombre d'actionneurs est impair. Dans ce cas, on aura intérêt à définir pour chaque roue deux groupements d'actionneurs qui ne différent que d'au plus d'une unité.

Bien que l'on ait illustré l'invention en relation avec un aéronef à deux atterrisseurs principaux portant chacun deux roues freinées, l'invention se généralise immédiatement à un aéronef dont les deux atterrisseurs principaux portent chacun plus de deux roues freinées, par exemple quatre ou six. Il suffit de définir sur chacun des atterrisseurs deux groupes de roues (par exemple chaque groupe de roues comprend les roues portées d'un même côté de l'atterrisseur) Sur chacun des groupes de roues (et donc de freins) ainsi déterminés, on fait alimenter un premier groupement d'actionneurs par l'un des boîtiers, et un second groupement complémentaire par un autre boîtier, selon l'agencement de l'invention. L'invention se généralise encore au cas des aéronefs comportant plus de deux atterrisseurs principaux. Si l'aéronef comporte par exemple deux atterrisseurs principaux de voilure et un atterrisseur principal central à roues freinées (cas de l'A340-600), il suffira d'affecter les roues portées par l'atterrisseur principal central à l'un ou l'autre des groupes de roues formés par les roues des atterrisseurs principaux de voilure.

Par extension, et pour user d'un vocabulaire commun dans la revendication, on parlera de groupe de roues, même si, dans l'exemple illustré, le groupe ne comporte qu'une seule roue.

## Revendications

1. Architecture d'alimentation de freins d'aéronef, pour un aéronef comportant au moins deux atterrisseurs comportant chacun un certain nombre de roues (L1,L2,R1,R2), chacune des roues étant équipée de freins comportant chacun un certain nombre d'actionneurs électromécaniques de freinage (1,2,3,4), l'architecture comportant des contrôleurs (EMACs) pour fournir aux actionneurs des signaux de puissance en réponse à un ordre de freinage, **caractérisée en ce que** les roues sur chacun des atterrisseurs sont regroupées en un premier (L1;R1) et deuxième (L2;R2) groupes complémentaires de sorte que pour chaque groupe de roues, un premier groupement d'actionneurs (1,2) est contrôlé par un contrôleur (EMAC1/EMAC4/EMAC5/EMAC8) qui ne contrôle que ces actionneurs, et un deuxième groupement complémentaire d'actionneurs (3,4) est contrôlé par un autre contrôleur (EMAC2/EMAC3/EMAC6/EMAC7) qui ne contrôle que ces actionneurs.

2. Architecture selon la revendication 1, dans laquelle les deux contrôleurs (EMAC1/EMAC2;EMAC3/EMAC4 ; EMAC5/EMAC6;EMAC7/EMAC8) contrôlant les actionneurs d'un même groupe de roues sont alimentés par des sources de puissance distinctes (AC1/AC2).

3. Architecture selon la revendication 2, comportant des boîtiers d'alimentation (B1...B4) pour alimenter les contrôleurs (EMACs) à partir des sources de puissance de l'aéronef (AC1/AC2), chacun des boîtiers d'alimentation alimentant deux contrôleurs.

4. Architecture selon la revendication 3, dans laquelle les boîtiers d'alimentation alimentent les contrôleurs de la façon suivants:
- le premier boîtier (B1) alimente le contrôleur (EMAC1) qui contrôle un groupement d'actionneurs (1,2) du premier groupe de roues (L1) du premier atterrisseur, et le contrôleur (EMAC8) qui contrôle un groupement d'actionneurs (1,2) du premier groupe de roues (R1) du deuxième atterrisseur;
- le deuxième boîtier (B2) alimente le contrôleur (EMAC2) qui contrôle un groupement complémentaire d'actionneurs (3,4) du premier groupe de roues du premier atterrisseur, et le contrôleur (EMAC5) qui contrôle un groupement d'actionneurs (1,2) du deuxième groupe de roues (R2) du deuxième atterrisseur;
- le troisième boîtier (B3) alimente le contrôleur (EMAC4) qui contrôle un groupement d'actionneurs (1,2) du deuxième groupe de roues (L2) du premier atterrisseur, et le contrôleur (EMAC6) qui contrôle un groupement complémentaire d'actionneurs (3,4) du premier groupe de roues (L1) du deuxième atterrisseur;
- le quatrième boîtier (B4) alimente le contrôleur (EMAC3) qui contrôle un groupement complémentaire d'actionneurs (3,4) du deuxième groupe de roues (L2) du premier atterrisseur, et le contrôleur (EMAC7) qui contrôle un groupement complémentaire d'actionneurs (3,4) du premier groupe de roues (R1) du deuxième atterrisseur.

## Patentansprüche

1. Aufbau zur Versorgung von Luftfahrzeugbremsen für ein Luftfahrzeug, das mindestens zwei Fahrwerke umfasst, die jeweils eine bestimmte Anzahl von Rädern (L1, L2, R1, R2) umfassen, wobei jedes der Räder mit Bremsen ausgestattet ist, die jeweils eine bestimmte Anzahl von elektromechanischen Bremsaktoren (1, 2, 3, 4) umfassen, wobei der Aufbau Kontrollgeräte (EMACs) umfasst, um den Aktoren Leistungssignale in Antwort auf einen Bremsbefehl zu liefern, **dadurch gekennzeichnet, dass** die Räder an jedem der Fahrwerke zu einer ersten Gruppe (L1; R1) und einer zweiten Gruppe (L2; r2), die komplementär zueinander sind, zusammengefasst sind, derart, dass für jede Rädergruppe eine erste Gruppierung von Aktoren (1, 2) von einem Kontrollgerät (EMAC1/EMAC4/EMAC5/ EMAC8) kontrolliert wird, das nur diese Aktoren kontrolliert, und eine komplementäre zweite Gruppierung von Aktoren (3, 4) von einem weiteren Kontrollgerät (EMAC2/EMAC3/EMAC6/EMAC7) kontrolliert wird, das nur diese Aktoren kontrolliert.

2. Aufbau nach Anspruch 1, wobei die beiden Kontrollgeräte (EMAC1/EMAC2; EMAC3/EMAC4; EMAC5/EMAC6; EMAC7/EMAC8), die die Aktoren einer selben Rädergruppe kontrollieren, von unterschiedlichen Leistungsquellen (AC1/AC2) versorgt werden.

3. Aufbau nach Anspruch 2, umfassend Versorgungsgehäuse (B1...B4) zum Versorgen der Kontrollgeräte (EMACs) ausgehend von Leistungsquellen des Luftfahrzeugs (AC1/AC2), wobei jedes der Versorgungsgehäuse zwei Kontrollgeräte versorgt.

4. Aufbau nach Anspruch 3, wobei die Versorgungsgehäuse die Kontrollgeräte auf folgende Weise versorgen:
- das erste Gehäuse (B1) versorgt das Kontrollgerät (EMAC1), das eine Gruppierung von Aktoren (1, 2) der ersten Rädergruppe (L1) des ersten Fahrwerks kontrolliert, sowie das Kontrollgerät (EMAC8), das eine Gruppierung von Aktoren (1, 2) der ersten Rädergruppe (R1) des zweiten Fahrwerks kontrolliert,
- das zweite Gehäuse (B2) versorgt das Kontrollgerät (EMAC2), das eine komplementäre Gruppierung von Aktoren (3, 4) der ersten Rädergruppe des ersten Fahrwerks kontrolliert, sowie das Kontrollgerät (EMAC5), das eine Gruppierung von Aktoren (1, 2) der zweiten Rädergruppe (R2) des zweiten Fahrwerks kontrolliert,
- das dritte Gehäuse (B3) versorgt das Kontrollgerät (EMAC4), das eine Gruppierung von Aktoren (1, 2) der zweiten Rädergruppe (L2) des ersten Fahrwerks kontrolliert, sowie das Kontrollgerät (EMAC6), das eine komplementäre Gruppierung von Aktoren (3, 4) der ersten Rädergruppe (L1) des zweiten Fahrwerks kontrolliert,
- das vierte Gehäuse (B4) versorgt das Kontrollgerät (EMAC3), das eine komplementäre Gruppierung von Aktoren (3, 4) der zweiten Rädergruppe (L2) des ersten Fahrwerks kontrolliert, sowie das Kontrollgerät (EMAC7), das eine komplementäre Gruppierung von Aktoren (3, 4) der ersten Rädergruppe (R1) des zweiten Fahrwerks kontrolliert.

## Claims

1. An architecture for powering aircraft brakes for an aircraft having at least two undercarriages, each having a certain number of wheels (L1, L2, R1, R2), each of the wheels being fitted with brakes, each having a certain number of electromechanical braking actuators (1, 2, 3, 4), the architecture including controllers (EMACs) for delivering power signals to the actuators in response to a braking order, the wheels on each of the undercarriages being grouped together in first and second complementary groups (L1, R1; L2, R2) such that for each group of wheels, a first group of actuators (1, 2) is controlled by one controller (EMAC1/EMAC4/EMAC5/EMAC8) that controls those actuators only, and a complementary second group of actuators (3, 4) is controlled by another controller (EMAC2/EMAC3/EMAC6/EMAC7) that controls only those actuators.

2. An architecture according to claim 1, wherein the two controllers (EMAC1/EMAC2; EMAC3/EMAC4; EMAC5/EMAC6; EMAC7/EMAC8) controlling the actuators of a given group of wheels are powered by distinct power supplies (AC1/AC2).

3. An architecture according to claim 2, having power supply units (B1...B4) for powering the controllers (EMACs) from power supplies (AC1/AC2) of the aircraft, each of the power supply units powering two controllers.

4. An architecture according to claim 3, wherein the power supply units power the controllers as follows:
• the first unit (B1) powers the controller (EMAC1) that controls one group of actuators (1,2) of the first group of wheels (L1) of the first undercarriage, and the controller (EMAC8) that controls one group of actuators (1, 2) of the first group of wheels (R1) of the second undercarriage;
• the second unit (B2) powers the controller (EMAC2) that controls a complementary group of actuators (3, 4) of the first group of wheels of the first undercarriage, and the controller (EMAC5) that controls a group of actuators (1, 2) of the second group of wheels (R2) of the second undercarriage;
• the third unit (B3) powers the controller (EMAC4) that controls a group of actuators (1, 2) of the second group of wheels (L2) of the first undercarriage, and the controller (EMAC6) that controls a complementary group of actuators (3, 4) of the first group of wheels (L1) of the second undercarriage; and
• the fourth unit (B4) powers the controller (EMAC3) that controls a complementary group of actuators (3, 4) of the second group of wheels (L2) of the first undercarriage, and the controller (EMAC7) that controls a complementary group of actuators (3, 4) of the first group of wheels (R1) of the second undercarriage.
